# EUROPEAN PATENT SPECIFICATION

(11) **EP 1 926 193 B1**
(45) Date of publication and mention of the grant of the patent: **31.07.2013**
(21) Application number: 07022313.6
(22) Date of filing: 16.11.2007
(51) Int. Cl.: H02G 3/30

(54) **A locking construction, connector provided therewith and unlocking method**
Verriegelungskonstruktion, Steckverbinder damit und Entriegelungsverfahren
Construction de verrouillage, connecteur doté de celle-ci et procédé de déverrouillage

(30) Priority: 24.11.2006 JP 2006317610
(43) Date of publication of application: 28.05.2008
(73) Proprietor: Sumitomo Wiring Systems, Ltd., Yokkaichi-city, Mie 510-8503 (JP)
(72) Inventor: Kobayashi, Tomohiko, Yokkaichi-city Mie 510-8503 (JP); Hata, Takao, Yokkaichi-city Mie 510-8503 (JP)
(74) Representative: Müller-Boré & Partner Patentanwälte

(56) References cited:
- FR-A- 2 300 290
- JP-A- 6 245 348
- US-A- 5 675 128
- US-A1- 2005 029 005

## Description

The present invention relates to a locking construction provided with a resiliently deformable lock piece, to a connector provided therewith and to an unlocking method therefor.

A lock construction of this type is, for example, known from Japanese Unexamined Patent Publication No. H08-9532. This construction is for locking a cover mounted on a box main body of a relay box, and lock projections are provided on the outer wall of the cover and cantilever-shaped lock pieces extending upward (toward a side at which the cover is mounted) are provided on the outer wall of the box main body. These lock pieces are formed with lock holes engageable with the lock projections of the cover.

When the cover is mounted atop the box main body, the upper ends of the lock pieces move onto the lock projections, thereby being resiliently deformed outward. When the upper ends of the lock pieces move over the lock projections, the lock pieces are resiliently restored inward and the lock holes of the lock pieces are engaged with the lock projections to lock the box main body and the cover into each other.

In the above locking construction, in order to detach the cover from the box main body for maintenance or the like, the leading end of a jig such a minus driver is inserted at the inner side of the upper end of the lock piece from above the cover (from above the upper end of the lock piece) to resiliently deform the lock piece in an unlocking direction. In this case, a lever action is generally utilized to perform an unlocking operation with a small force and, hence, the jig is inclined toward the cover about the leading end thereof and an intermediate part of the jig is brought into contact with the outer edge of the cover while the leading end of the jig is placed on the leading end of the lock piece. If the jig is further inclined with the contact part of the cover with the jig as a fulcrum, the leading end of the jig can displace the lock piece in the unlocking direction.

In the case of unlocking utilizing such a lever action, an angle of the jig at the time of unlocking is substantially determined by the position of the leading end of the lock piece and the position of the fulcrum obtained when the intermediate part of the jig comes into contact with the cover. However, in the above construction, the supporting point is located at only one point determined by the shape of the cover. This means that an insertion area of the jig for the unlocking operation is restricted to a very narrow angle range only at one point, which consequently leads to restriction in terms of the arrangement of parts since other parts cannot be arranged in a planned area where the jig is to be inserted for the unlocking operation.

For example, in the case of assembling electric components such as switches and connectors into a vehicle door, a high-density arrangement is forced due to no sufficient space around these electric components. In such a case, the above conventional locking construction cannot be adopted as the one for the electric components due to the above restriction in terms of the arrangement of parts.

JP 06 245 348 A discloses a lock for electronic unit comprising a resilient protrusion provided at a tip of a hooked part and a guide part provided at a counter part to be engaged with the resilient protrusion.

US 2005/0029005 A1 discloses a harness fixing protector comprising a base member and a cover member attached to the base member. The base member has first and second harness inserting portions.

The present invention was developed in view of the above situation, and an object thereof is to provide a locking construction including a resiliently deformable lock piece and capable of alleviating restriction on a jig insertion area necessary for an unlocking operation and, consequently, alleviating restriction in terms of the arrangement of parts.

This object is solved according to the invention by the features of the independent claims. Preferred embodiments of the invention are subject of the dependent claims.

According to the invention, there is provided a locking construction for locking one member and another member in an attached state, comprising:

At lest one lock piece provided on the one member, having a cantilever shape whose front end in an attaching direction to the other member is a free end, resiliently deformable upon attaching the one member and the other member to each other and resiliently at least partly restorable to be engaged with a lock portion provided on the other member when the two members reach a properly attached state,

At least one unlocking portion which is provided at the lock piece and with which the leading end of an unlocking jig is engageable,
a first fulcrum portion provided at a side of the lock piece closer to the base end than the unlocking portion in the one member and adapted to support a part of the unlocking jig, which part is located closer to the base end of the unlocking jig than the leading end thereof, when the leading end of the unlocking jig is engaged with the unlocking portion, thereby supporting a lever action for resiliently deforming the lock piece in an unlocking direction with the leading end of the unlocking jig, and
a second fulcrum portion provided at a position different from the first fulcrum portion and adapted to support a part of the unlocking jig, which part is located closer to the base end of the unlocking jig than the leading end thereof, when the leading end of the unlocking jig is engaged with the unlocking portion, thereby supporting a lever action for resiliently deforming the lock piece in the unlocking direction with the leading end of the unlocking jig, such that an insertion area for the unlocking jig is different depending on whether unlocking is effected by using the first fulcrum portion or the second fulcrum portion as a fulcrum.

Accordingly; in order to disengage the lock portion and the lock piece, the lock piece can be resiliently deformed in the unlocking direction by inserting the unlocking jig near the first fulcrum portion to engage the leading end thereof with the unlocking portion and utilizing a lever action with the part of the unlocking jig closer to the base end than the leading end placed on the first fulcrum portion. The lock piece can be similarly resiliently deformed in the unlocking direction by inserting the unlocking jig near the second fulcrum portion provided at the position different from the first fulcrum portion to engage the leading end thereof with the unlocking portion and placing the part of the unlocking jig closer to the base end than the leading on the second fulcrum portion. An insertion area for the unlocking jig differs depending on whether unlocking is effected using the first fulcrum portion as a fulcrum or using the second fulcrum portion as a fulcrum. Thus, unlocking can be effected by inserting the unlocking jig into the selected one of the different insertion areas, wherefore restriction on the insertion area for the unlocking jig can be more alleviated as compared to the case where the insertion area is limited to one spot.

Since it is sufficient to ensure either one of the two different insertion areas for the unlocking operation, a degree of freedom in designing for the arrangement of parts and the like can be improved and restriction in terms of the arrangement of parts can be alleviated.

Therefore, restriction on the insertion areas for the unlocking jig necessary for the unlocking operation can be alleviated, which consequently leads to the alleviation of restriction in terms of the arrangement of parts.

According to a preferred embodiment of the invention, the other member includes a pair of lock wall portions each having the lock portion and substantially facing each other.

Preferably, a pair of lock pieces are so provided as to be engageable with the pair of lock wall portions from the corresponding outer sides.

Further preferably, the respective lock pieces are integrally or unitarily provided with auxiliary walls at least partly insertable at the inner sides of the pair of lock wall portions and capable of at least partly sandwiching the lock wall portions in cooperation with the lock pieces.

Most preferably, the other member includes a pair of lock wall portions each having the lock portion and facing each other,
a pair of lock pieces are so provided as to be engageable with the pair of lock wall portions from the corresponding outer sides, and
the respective lock pieces are integrally provided with auxiliary walls insertable at the inner sides of the pair of lock wall portions and capable of sandwiching the lock wall portions in cooperation with the lock pieces.

Accordingly, the respective lock pieces are engaged with the lock wall portions provided on the other member by sandwiching them in cooperation with the auxiliary walls. Since these auxiliary walls are provided integral to the lock pieces, the lock pieces becomes more unlikely to be displaced outward (unlocking direction). Therefore, the lock pieces and the lock portions are more unlikely to be disengaged from each other, and the one member and the other member can be reliably held in the attached state.

According to a further preferred embodiment of the invention, the unlocking portion is exposed at the free end side of the lock piece.

Accordingly, since the unlocking portion is exposed at the free end side of the lock piece, the unlocking jig can be inserted from the free end side of the lock piece to disengage the lock piece and the lock portion. Since the unlocking operation can be carried out not only from the base end side of the lock piece, but from the free end side thereof, restriction on the insertion area for the unlocking jig necessary for the unlocking operation can be more alleviated and, consequently, restriction in terms of the arrangement of parts can be alleviated.

Preferably, the lock piece is comprised of a pair of standing portions standing up from the projecting end(s) of at least one connecting portion and an engaging portion connecting the upper ends of the standing portions.

Further preferably, a first guiding surface inclined or bent substantially along an inserting direction of the unlocking jig is formed at the inner side of one portion of the unlocking portion.

Most preferably, a second guiding surface inclined or bent substantially along an inserting direction of the unlocking jig is formed at the outer side of one portion of each auxiliary wall and/or at the second fulcrum portion.

According to the invention, there is further provided a connector having a wire holder mountable thereto by means of a locking construction according to the invention or a preferred embodiment thereof, wherein a guiding portion of the wire holder for holding the one or more bent wires to extend in a specified direction is the one member and a fixable portion of a connector housing of the connector is the other member.

A method for unlocking or disengaging a locking construction, in particular according to the invention or a preferred embodiment thereof, locking one member and another member in an attached state, comprising the following steps:
providing at least one lock piece on the one member, the lock piece having a cantilever shape whose front end in an attaching direction to the other member is a free end, resiliently deformable upon attaching the one member and the other member to each other and resiliently at least partly restorable to be engaged with at least one lock portion provided on the other member when the two members reach a properly attached state,
providing at least one unlocking portion at the lock piece and with which the leading end of an unlocking jig is engageable,
selectively engaging the unlocking jig with
   a first fulcrum portion provided at a side of the lock piece closer to the base end than the unlocking portion in the one member or a second fulcrum portion (27) provided at a position different from the first fulcrum portion, so as to select an insertion area for the unlocking jig, said first fulcrum portion and said second fulcrum portion being adapted to support a part of the unlocking jig, which part is located closer to the base end of the unlocking jig than the leading end thereof, when the leading end of the unlocking jig is engaged with the unlocking portion,
so as to generate a lever action for resiliently deforming the lock piece in an unlocking direction with the leading end of the unlocking jig.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a side view showing a state where a wire holder is mounted in one embodiment,
FIG. 2 is a side view of the wire holder,
FIG. 3 is a rear view of the wire holder,
FIG. 4 is a perspective view showing the external appearances of the wire holder and a fixable portion,
FIG. 5 is a partial enlarged section showing a state where a jig is inserted through a first opening of a left lock piece,
FIG. 6 is a partial enlarged section showing a state where the left lock piece is unlocked,
FIG. 7 is a partial enlarged section showing a state where the jig is inserted through a second opening of a right lock piece, and
FIG. 8 is a partial enlarged section showing a state where the right lock piece is unlocked.

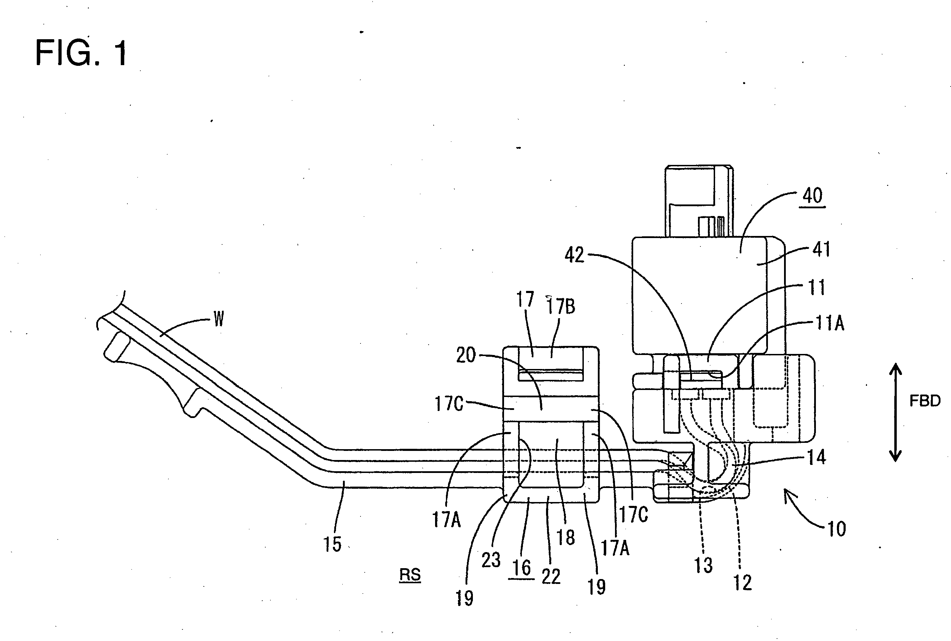

Hereinafter, one preferred embodiment is described with reference to FIGS. 1 to 8.

A wire holder 10 of this embodiment is mounted or mountable on a connector 40 connectable with a device-side connector (not shown) to hold one or more wires W drawn out from the connector 40 while bending them in a specified (predetermined or predeterminable) direction.

The connector 40 includes a housing 41 made e.g. of a synthetic resin material and preferably substantially in the form of a rectangular parallelepiped, and one or more non represented terminal fittings are at least partly accommodated in the housing 41. The wires W connected with the respective terminal fittings are held while being bent in a bending direction preferably substantially forward (to the left in FIG. 1) by the wire holder 10 after extending in a draw-out direction (preferably substantially downward) from a draw-out surface (preferably the bottom surface) of the housing 41. One or more, preferably a pair of locking projections 42 used to mount the wire holder 10 are provided while preferably being spaced apart in width direction.

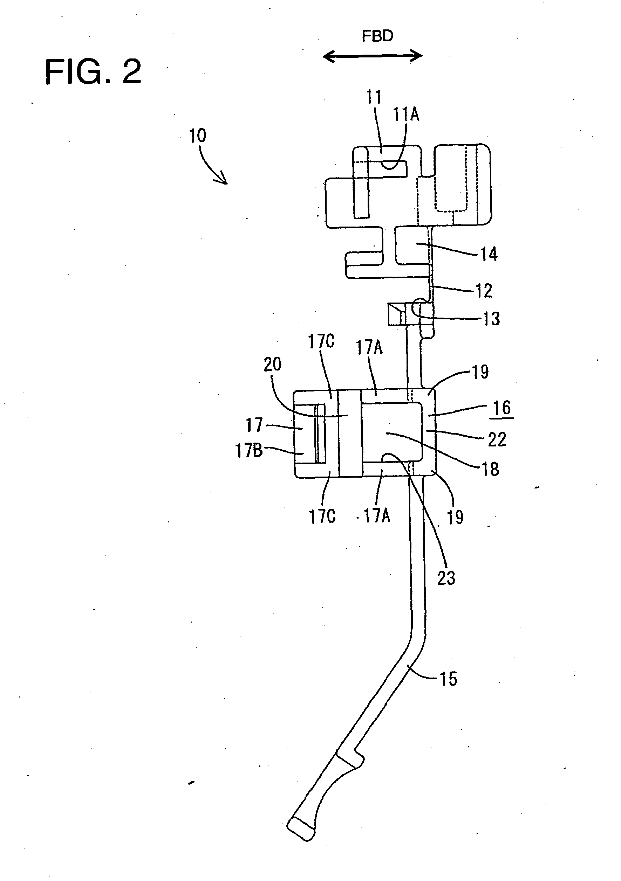

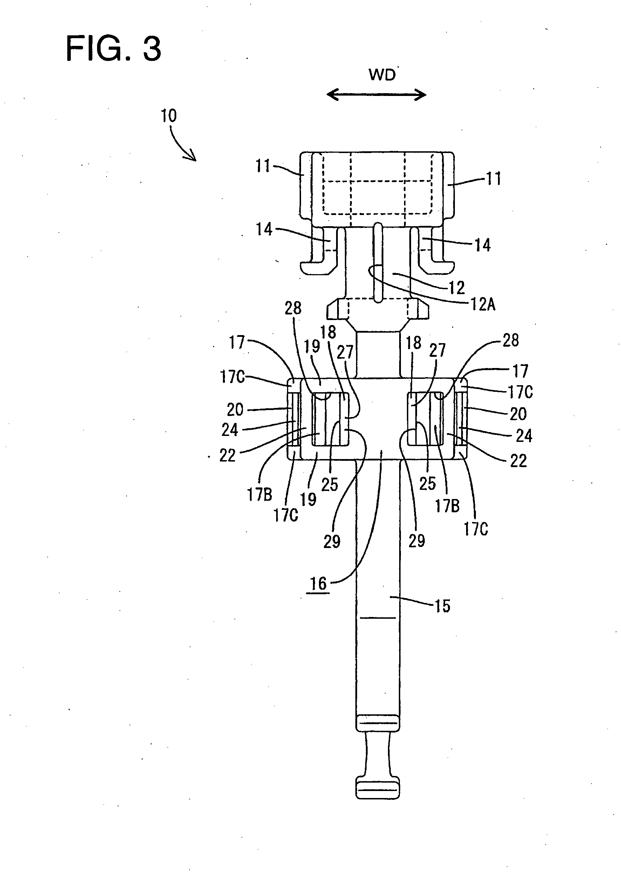

The wire holder 10 is made e.g. of a synthetic resin material and is so mounted as to extend substantially along the rear side (a restoring side RS of the bent wires W) of the wires W projecting out or hanging down from the housing 41. The wire holder 10 has a (preferably substantially vertically) long shape as a whole before the wires W are bent (see FIGS. 2 and 3).

One or more, preferably a pair of mounting portions 11 for holding the wire holder 10 mounted on the housing 41 are provided at or near the distal (preferably substantially upper) end of the wire holder 10 while preferably being spaced apart in width direction. Each mounting portion 11 is formed with a locking hole 11A engageable with the corresponding locking projection 42 of the connector 40, and the wire holder 10 is to be held mounted on the connector 40 by the engagement of the corresponding locking hole(s) 11 A and locking projection(s) 42.

A bendable portion 12 bendable in forward and backward directions FBD (transverse direction in FIG. 2) is provided below the mounting portions 11. As shown in FIG. 3, the bendable portion 12 preferably substantially is in the form of a substantially rectangular thin plate long or elongated in extension direction (preferably substantially vertical direction) and at least one hole 12A long in extension direction (preferably substantially vertical direction) is formed at a widthwise intermediate position (preferably substantially at a widthwise middle position) thereof to increase flexibility. The bendable portion 12 is formed at a position retracted backward from parts above and below it, and an escaping portion 13 recessed backward is formed in the front side of the bendable portion 12 as shown in FIG. 2. If the bendable portion 12 is bent forward at an angle different from 0° or 180°, preferably substantially at a right angle, the wires W arranged before it are bent at an angle different from 0° or 180°, preferably substantially at right angles and the bent parts of the wires W at least partly enter the escaping portion 13, whereby the wires W are more closely attached to the wire holder 10 to suppress the shake of the wires W at positions near the housing 41 and/or prevent the adverse effect on the terminal fittings.

One or more, preferably a pair of protection walls 14 are provided at the (preferably substantially opposite) side(s) of the bendable portion 12 while preferably being spaced apart in width direction WD. The preferably pair of protection walls 14 are in the form of walls whose inner surfaces substantially face each other, and protect the bent parts of the wires W by covering them.

A part of the wire holder 10 below the bendable portion 12 serves as a guiding portion 15 for holding the one or more bent wires W to extend forward. The guiding portion 15 preferably substantially is in the form of a narrow and long flat plate extending downward from the bendable portion 12.

A fixing portion 16 for locking the guiding portion 15 in an attached state to a fixable portion 50 (corresponding to a preferred another member) is provided at a position of the guiding portion 15 preferably near the upper end thereof (position near the bendable portion 12). By fixing this fixing portion 16 to the fixable portion 50 with the bendable portion 12 bent, the wires W are or can be held bent. It should be noted that the guiding portion 15 corresponds to the preferred one member.

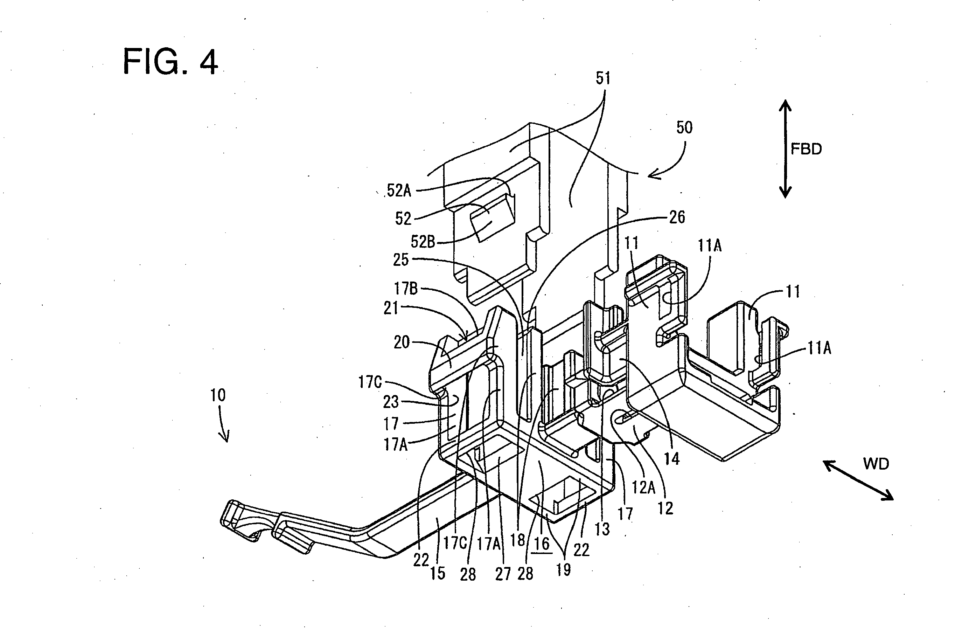

The fixable portion 50 includes one or more, preferably a pair of lock wall portions 51 arranged preferably to substantially face each other (see FIGS. 4 to 8). The lock wall portions 51 preferably are in the form of vertically long walls as a whole and lock projections 52 (corresponding to a preferred lock portion) are provided on the outer surface(s) (preferably surfaces substantially opposite to those facing each other) of the both lock wall portions 51. The respective lock projections 52 project outward from the outer surfaces of the lock wall portions 51, and the upper surfaces of the respective lock projections 52 serve as lock surfaces 52A substantially vertical to the outer surfaces of the lock wall portions 51 and the lower surfaces thereof serve as inclined bearing surfaces 52B whose heights from the outer surfaces of the lock wall portions 51 preferably increase little by little from the bottom side toward the top side.

The fixing portion 16 provided on the guiding portion 15 includes one or more, preferably a pair of lock pieces 17 engageable with the respective one or more (preferably pair of) lock wall portions 51 from the outer side(s), and one or more, preferably a pair of auxiliary walls 18 which can sandwich the corresponding lock wall portions 51 in cooperation with the corresponding lock pieces 17 by being at least partly inserted at the inner sides of the pair of lock wall portions 51.

As shown in FIGS. 3 and 4, the pair of lock pieces 17 and the pair of auxiliary walls 18. are integral or unitary to each other by being connected by one or more, preferably a pair of connecting portions 19 preferably projecting to the opposite sides in width direction WD from the guiding portion 15. The pair of connecting portions 19 are spaced apart by a specified (predetermined or predeterminable) distance (preferably substantially larger than the width of the lock projections 52) in forward and backward directions FBD (extending direction of the guiding portion 15).

The pair of cantilever-shaped lock pieces 17 stand back-to-back at the substantially opposite ends of the connecting portion 19 with respect to the projecting direction, and the upper ends (front ends with respect to an attaching direction to the fixable portion 50) are free ends. The pair of lock pieces 17 are resiliently deformed outward (opening directions) upon attaching the guiding portion 15 to the fixable portion 50 while being resiliently at least partly restored inward (closing directions) to be engaged with the lock projections 52 of the fixable portion 50 when the guiding portion 15 and the fixable portion 50 reach a proper attached state.

As shown in FIGS. 1 and 2, each lock piece 17 is comprised of one or more, preferably a pair of standing portions 17A standing up from the projecting end(s) of the corresponding connecting portion 19 and preferably an engaging portion 17B connecting the upper ends of the standing portions 17A. The respective standing portions 17A preferably are substantially in the form of cantilevers whose base ends are located at the connected positions with the connecting portion 19 and whose upper ends (leading ends) are free ends. Each pair of the standing portions 17A preferably are spaced apart by a distance larger than the width of the lock projection 52.

As shown in FIG. 4, each standing portion 17A preferably is formed such that a dimension in inward and outward directions (directions along the projecting directions of the connecting portion 19) is slightly larger than a dimension in forward and backward directions (facing directions of the standing portions 17A), thereby setting higher rigidity in inward and outward directions than in forward and backward directions FBD. Further, a jutting or projecting portion 17C jutting or projecting more outward than a lower part (base end part) is formed at an upper part (preferably at a substantially upper half) of each standing portion 17A.

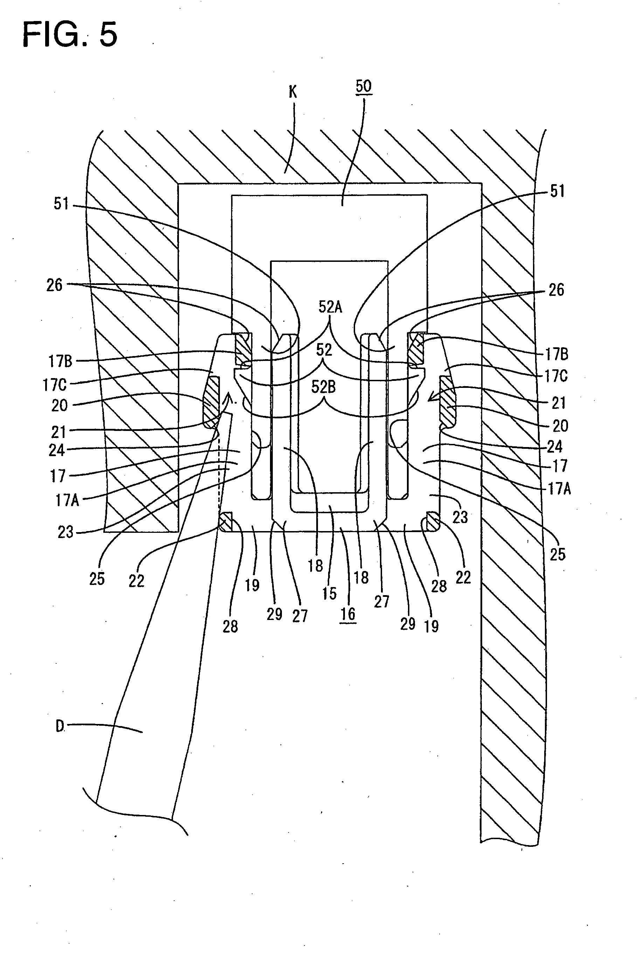

As shown in FIG. 5, the engaging portions 17B are engageable with the lock surfaces 52A of the lock projections 52 from above. The engaging portions 17B connect the upper ends of the pair of standing portions 17A, and are located at the innermost positions of these upper ends.

By connecting the opposite ends of the engaging portion 17B with the pair of standing portions 17A, a force acting on the engaging portion 17B is received by the both standing portions 17A. Thus, the strong contact of the engaging portions 17B and the lock surfaces 52A of the lock projections 52 can be endured. Further, by preferably providing the engaging portion 17B at or near the upper ends of the standing portions 17A, the extension of the standing portions 17A (i.e. the lock pieces 17) can be suppressed to a minimum level.

An unlocking portion 20 engageable with the leading end of an unlocking jig D (preferably formed with a flat surface at the leading end of a shaft portion) is provided at positions of the standing portions 17A above vertical middle positions. The unlocking portion 20 connects the jutting portions 17C of the standing portions 17A. The unlocking portion 20 preferably is substantially in the form of a plate extending along or near the projecting edges of the jutting portions 20 (outer side edges of the lock pieces 17), and the position of the inner surface thereof preferably is substantially aligned with those of the outer edges of the lower parts of the standing portions 17A (excluding the jutting portions 17C) in inward and outward directions. The lock piece 17 is displaced outward (unlocking direction) by placing the leading end of the unlocking jig D on the inner surface of the unlocking portion 20 and pushing this inner surface.

A vertically open passage 21 is defined between the unlocking portion 20 and the engaging portion 17B. Through this passage 21, the leading end of the unlocking jig D can be at least partly inserted from below and above the lock piece 17 to push or operate the unlocking portion 20.

A first fulcrum portion 22 for supporting the unlocking jig D having the leading end thereof placed on the inner surface of the unlocking portion 20 is provided at or near the bottom ends of the standing portions 17A (lock piece 17). The first fulcrum portion 22 preferably connects the bottom ends of the standing portions 17A, i.e. connects the projecting ends of the connecting portion 19. The first fulcrum portion 22 preferably is displaced inward of the unlocking portion 20 located at the outermost ends of the standing portions 17A (leading edges of the jutting portions 17C), in other words, the position of the inner surface of the unlocking portion 20 and that of the outer surface of the first fulcrum portion 22 preferably are substantially aligned in inward and outward directions.

A first opening 23 is defined between the first fulcrum portion 22 and the unlocking portion 20. The first opening 23 is an opening at least partly surrounded by the unlocking portion 20, the first fulcrum portion 22 and/or the both standing portions 17A. The unlocking jig D can be at least partly inserted into the first opening 23 from an outer lower side to bring the leading end thereof substantially into contact with the inner surface of the unlocking portion 20 and have a lower part thereof (part closer to the base end than the leading end) supported on the first fulcrum portion 22. Further, a first guiding surface 24 inclined or bent to guide the leading end of the unlocking jig D from the outer side toward the inner side (inclined along an inserting direction of the unlocking jig D) is formed at the inner side of the bottom end of the unlocking portion 20.

One or more, preferably a pair of auxiliary walls 18 are provided at the inner side(s) of (the pair of) lock piece(s) 17 and at the (preferably substantially opposite) side(s) of the guiding portion 15. The auxiliary walls 18 preferably are in the form of substantially rectangular walls long in vertical direction, and stand up from the connecting portion 19 such that the plate surfaces thereof substantially face each other. The width of the respective auxiliary walls 18 along shorter sides (in the longitudinal direction of the guiding portion 15) preferably is set substantially equal to that of the lock pieces 17 along shorter sides, and/or the longitudinal dimension thereof (vertical dimension) preferably is set substantially equal to the extension of the lock pieces 17.

A specified (predetermined or predeterminable) spacing (sum of the thickness of the lock wall portion 51 and a specified (predetermined or predeterminable) clearance) is defined between each auxiliary wall 18 and the corresponding lock piece 17 (standing portions 17A), and the outer surface of the auxiliary wall 18 and the inner surface of the lock piece 17 (inner surfaces of the both standing portions 17A) face each other. Spaces between the respective auxiliary walls 18 and the respective lock pieces 17 serve as a pair of insertion portions 25, into which the lock wall portions 51 are at least partly insertable. One or more slanted surfaces 26 inclined to preferably narrow the spacing therebetween from the upper end toward the lower side are formed at the upper ends of the respective insertion portions 25, in other words, at the inner sides of the upper ends of the respective auxiliary walls 18 and lock pieces 17 facing each other.

The bottom ends of the respective auxiliary walls 18 serve as second fulcrum portions 27 for supporting the unlocking jig D having the leading end thereof placed on the inner surface of the unlocking portion 20. A second opening 28 is defined between the corresponding first fulcrum portion 22 and second fulcrum portion 27. As shown in FIGS. 3 and 4, the second opening 28 is surrounded by the second fulcrum portion 27, the both connecting portions 19 and the first fulcrum portion 22. The unlocking jig D can be at least partly inserted into the second opening 28 from an inner lower side to bring the leading end thereof into contact with the inner surface of the unlocking portion 20 and have a lower part thereof (part closer to the base end than the leading end) supported on the second fulcrum portion 27. Further, a second guiding surface 29 inclined or bent to guide the leading end of the unlocking jig D from the lower side toward the upper side (inclined substantially along an inserting direction of the unlocking jig D) is formed at the outer side of the bottom end (second fulcrum portion 27) of each auxiliary wall 18.

Next, functions and effects of this embodiment constructed as above are described.

First, how to mount the wire holder 10 is described.

Firstly, with the wire holder 10 (guiding portion 15) placed substantially along the rear sides of the one or more wires W extending in the draw-out direction (preferably substantially downward) from the connector 40, the locking holes 11 A of the wire holder 10 are engaged with the locking projections 42 of the housing 41 to mount the wire holder 10 on the connector 40.

Subsequently, as shown in FIG. 1, the bendable portion 12 of the wire holder 10 is bent to bend the one or more wires W at an angle different from 0° or 180°, preferably substantially at right angles and the fixing portion 16 is fixed to the fixable portion 50. As the fixing portion 16 is brought closer to the fixable portion 50 while the bendable portion 12 is bent and the respective insertion portions 25 are positioned with respect to the respective lock wall portions 25, the bottom ends of the respective lock wall portions 51 are at least partly inserted into the upper ends of the insertion portions 25. Here, since the slanted surfaces 26 preferably are formed at the upper ends of the insertion portions 25, the orientation of the fixing portion 16 can be corrected by the contact of the slanted surfaces 26 with the bottom ends of the respective lock wall portions 51. In this way, the at least partial insertion into the insertion portions 25 can be smoothly carried out.

When the fixing portion 16 is brought closer to the fixable portion 50, the respective lock wall portions 51 are more deeply inserted into the corresponding insertion portions 25 and one or more of the (preferably both) lock pieces 17 are resiliently deformed in directions to widen the spacing therebetween (outward) as the engaging portions 17B thereof move onto the bearing surfaces 52B. When the engaging portions 17B move over the lock projections 52, the lock pieces 17 are resiliently at least partly restored and the engaging portions 17B are engaged with the lock projections 52 from above, whereby the fixing portion 16 is locked with the fixable portion 50. At this time, the bottom ends of the lock wall portions 51 preferably are arranged very close to the upper sides of the connecting portions 19 of the fixing portion 16 (or in contact therewith), thereby preventing an upward displacement of the fixing portion 16 relative to the lock wall portions 51 by the contact of the connecting portions 19 with the bottom ends of the lock wall portions 51. Therefore, the locked state can be reliably kept.

The respective lock wall portions 51 are locked preferably while sandwiched between the respective lock pieces 17 and the respective auxiliary walls 18. Thus, if a force acts on the respective lock pieces 17 in such a direction as to displace the lock pieces 17 outward (unlocking directions), the auxiliary walls 18 formed integral or unitary to the lock pieces 17 try to move outward. However, outward (unlocking directions of the lock pieces 17) displacements of the auxiliary walls 18 are prevented by the contact with the lock wall portions 51 arranged at the outer sides thereof. Accordingly, the lock pieces 17 are unlikely to be deformed in the unlocking directions and the lock pieces 17 and the lock projections 52 are unlikely to be disengaged, wherefore the guiding portion 15 of the wire holder 10 is reliably held fixed to the fixable portion 50.

Since the respective standing portions 17A preferably are structured to have high rigidity in inward and outward directions, the lock pieces 17 are unlikely to be resiliently deformed, thereby preventing inadvertent resilient deformations of the lock pieces 17 in the unlocking directions to effect unlocking, for example, by the lock pieces 17 getting caught by an external matter.

Since the auxiliary walls 18 preferably have the substantially same height as the lock pieces 17, a sufficient depth can be ensured for the insertion portions 25, the lock wall portions 51 and the lock pieces 17 are unlikely to be inclined relative to each other and the locked state can be reliably held, for example, as compared to the case where the auxiliary walls 18 have a low height.

If the fixing portion 16 is locked with the fixable portion 50 in this way, the guiding portion 15 is substantially horizontally held to extend forward. Then, the wires W are supported by the guiding portion 15 from the restoration side (preferably substantially from below), thereby being prevented from undergoing resilient restorations in such a direction to widen the angle of the bent parts (downward).

Next, how to detach the wire holder 10 is described.

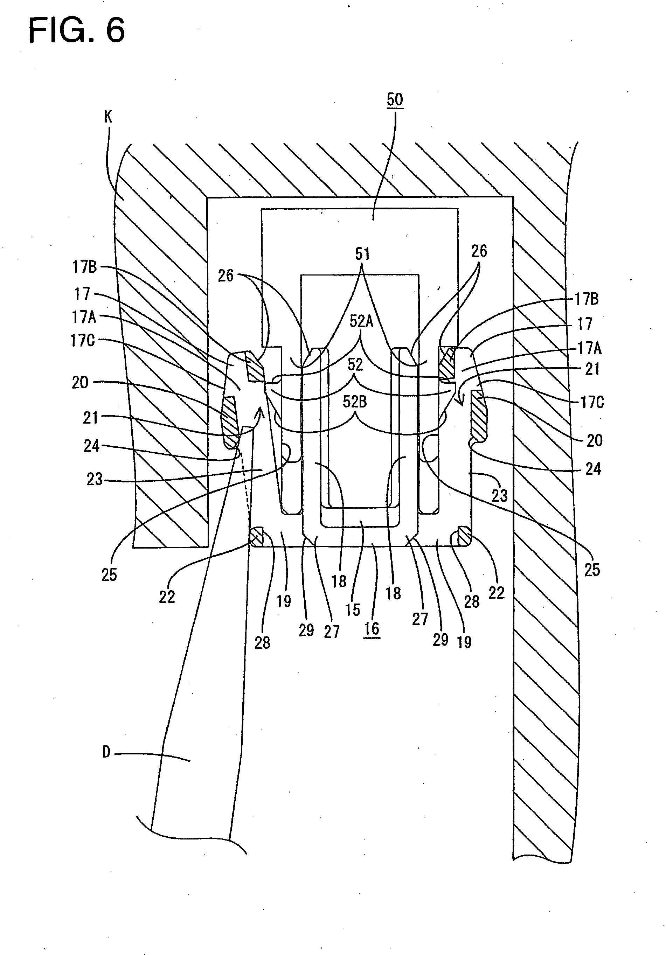

First, the fixing portion 16 is detached from the fixable portion 50. Here is described a case where the fixable portion 50 has the opposite left and right sides and the upper side at least partly surrounded by a wall K and is disposed in a recessed space where the wall K extends downward at the right side (right side in FIG. 5). It should be noted that minimum spaces enabling the resilient deformations of the lock pieces 17 at the time of detaching the fixing portion 16 are defined between the wall K at the left and right sides and the lock pieces 17 (see FIG. 6).

Firstly, the how to unlock the left lock piece 17 is described. Since there is no area for the insertion of the unlocking jig D into the second opening 28 (insertion area) because of the presence of the wall K at the right lower side, the unlocking jig D is at least partly inserted into the first opening 23 from the left lower side as shown in FIG. 5. The leading end of the unlocking jig D is placed substantially on the inner surface of the unlocking portion 20 and an intermediate part of the unlocking jig D is supported on the first fulcrum portion 22. The leading end of the unlocking jig D is smoothly at least partly inserted without getting caught by the bottom end of the unlocking portion 20 while being guided by the first guiding surface 24 formed at the bottom end of the unlocking portion 20.

Subsequently, if the lower side of the unlocking jig D is displaced to the right, utilizing the lever action about the first fulcrum portion 22, the leading end of the unlocking jig D is displaced outwardly (to the left) as shown in FIG. 6, whereby the unlocking portion 20 is pushed or displaced outwardly (to the left) and the lock piece 17 is resiliently deformed to the left (unlocking direction). If the engaging portion 17B of the lock piece 17 is displaced to a position outwardly (to the left) of the lock projection 52, the engaging portion 17B and the lock surface 52A are disengaged to effect unlocking. Here, since the right surface of the unlocking portion 20 (surface where the leading end of the unlocking jig D is placed) and the left surface of the first fulcrum portion 22 (surface supporting the bottom end of the unlocking jig D) are substantially aligned in transverse direction in the locked state, the unlocking jig D is in such a posture substantially vertically straight with the lower side thereof slightly inclined to the left. Accordingly, even if there is no area for inclining the unlocking jig D (operation area) because of the extension of the wall K to the right lower side, the unlocking operation can be carried out.

Since the rigidity of the base end of the lock piece 17 preferably is high, a relatively large force acts on the first fulcrum portion 22 at the time of unlocking. However, the first fulcrum portion 22 can endure such a large force since the opposite ends of the first fulcrum portion 22 are supported on the standing portions 17A and the force acting on the first fulcrum portion 22 is received by the both standing portions 17A.

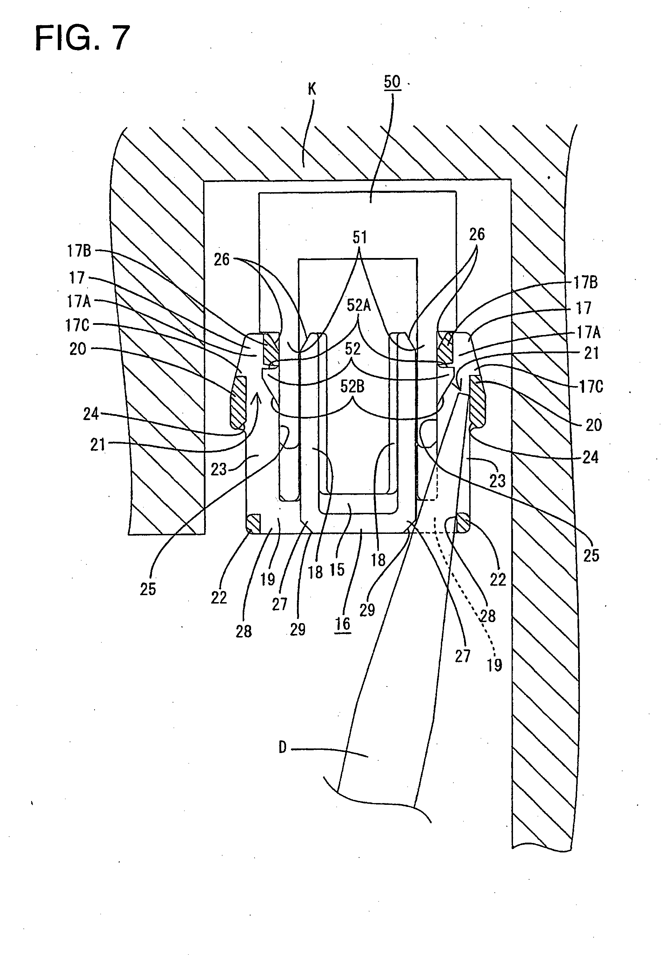

Next, how to unlock the right lock piece 17 is described. Since the unlocking jig D cannot be inserted into the first opening 23 because of the presence of the wall K, it is at least partly inserted into the second opening 28 from the left lower side as shown in FIG. 7. The leading end of the unlocking jig D is placed substantially on the inner surface of the unlocking portion 20 and the lower side thereof is supported on the second fulcrum portion 27. The leading end of the unlocking jig D is smoothly at least partly inserted without getting caught by the bottom end of the auxiliary wall 18 preferably while being guided by the second guiding surface 29 formed at the bottom end of the auxiliary wall 18.

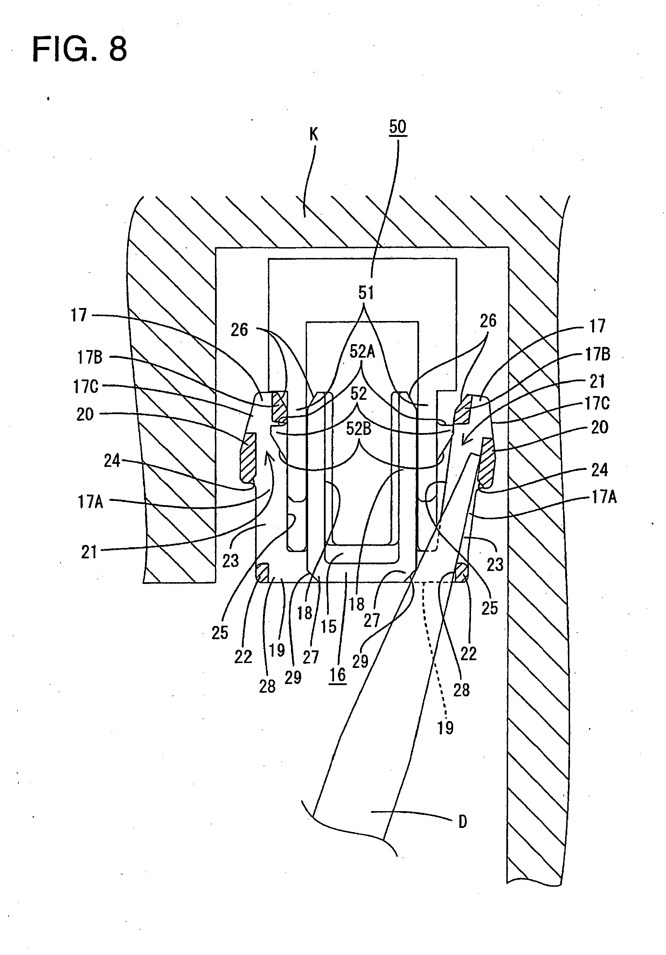

Subsequently, if the lower side of the unlocking jig D is displaced outwardly (to the left), utilizing the lever action about the second fulcrum portion 27, the leading end of the unlocking jig D is displaced inwardly (to the right) as shown in FIG. 8, whereby the unlocking portion 20 is pushed inwardly (to the right) and the lock piece 17 is resiliently deformed to the right (unlocking direction). If the engaging portion 17B of the lock piece 17 is displaced to a position to the right of the lock projection 52, the engaging portion 17B and the lock surface 52A are disengaged to effect unlocking. In this unlocked state, the unlocking jig D is in such a posture that the lower side thereof is inclined to the left. In this way, the both left and right lock pieces 17 are unlocked.

According to the locking construction of this embodiment, unlocking can be also effected in the case where the left wall extends downward and there is no insertion area for the unlocking jig D at the left lower side of the fixing portion 16 contrary to the aforementioned case. In such a case, the unlocking jig D cannot be inserted through the first opening 23 upon unlocking the left lock piece 17, but unlocking can be effected by inserting the unlocking jig D through the second opening 28 instead. Further, the unlocking jig D cannot be inserted through the second opening 28 upon unlocking the right lock piece 17, but unlocking can be effected by at least partly inserting the unlocking jig D through the first opening 23 instead. At the time of unlocking this right lock piece 17, the unlocking jig D comes to take such a posture substantially vertically straight with the lower side thereof slightly inclined to the right since the position of the left surface (inner surface) of the unlocking portion 20 and that of the right surface of the first fulcrum portion 22 are set to be substantially aligned in transverse direction, wherefore unlocking can be effected even if there is no area for inclining the unlocking jig D (operation area) at the left lower side.

Specifically, according to this embodiment, it is sufficient if the insertion area for the unlocking jig D necessary for the unlocking position is present at a lateral lower side (either at the left lower side or the right lower side) of the fixing portion 16. Here, if there is, for example, only one fulcrum of the lever action for each lock piece as before, the insertion area of the unlocking jig D is limited to one spot for each lock piece. In other words, if there are a pair of left and right lock pieces, one insertion area for the unlocking jig D has to be provided for each lock piece, i.e. a total of two insertion areas (both left and right lower sides) have to be provided. Then, this locking construction cannot be adopted in the case where insertion areas cannot be provided at the opposite sides because of the presence of a wall at either one of the left and right lower sides of the fixing portion 16 as in this embodiment.

However, according to the construction of this embodiment, restriction on the areas necessary for the unlocking operation is more alleviated than before. Thus, restriction in terms of the arrangement of parts or the like in the periphery can be alleviated by being able to cope with the extension of the wall at one side of the fixing portion 16 regardless of which of the left and right walls extends.

Further, since the (preferably substantially vertically) open passages 21 are defined between the unlocking portions 20 and the engaging portions 17B and the unlocking jig D can be at least partly inserted from above to push the unlocking portion 20, the insertion area for the unlocking operation may be provided only at the upper side of the fixing portion 16. Specifically, contrary to this embodiment, unlocking can be effected even if the lower three sides of the fixing portion 16 are at least partly surrounded by the wall K. At this time, unlocking can also be effected by at least partly inserting the unlocking jig D between the leading end of the lock piece 17 and the lock wall portion 51.

Each unlocking portion 20 preferably is substantially plate-like and the area of the inner surface thereof is set relatively larger than the leading end of the unlocking jig D. Thus, the insertion depth of the unlocking jig D can be permitted to vary regardless of which of the left and right lock pieces 17 is to be unlocked, wherefore the unlocking jig D can easily push the lock pieces 17.

Further, the miniaturization of the lock pieces 17 and the facility of the unlocking operation are realized preferably by arranging the unlocking portions 20 at positions displaced downward from the engaging portions 17B (toward the base ends of the lock pieces 17). This is because there is a likelihood of enlarging lock pieces to define insertion passages for the unlocking jig D between engaging portions and unlocking portions if the unlocking portions and the engaging portions are arranged at the substantially same height positions in vertical direction and, on the other hand, there is a likelihood of making it difficult to displace the lock pieces in the unlocking directions if the unlocking portions are arranged at positions too close to the base ends of the lock pieces. By arranging the unlocking portions 20 at the positions displaced downward right below the engaging portions 17, such situations can be avoided.

The wire holder 10 can be detached by detaching the mounting portions 11 from the housing 41 after the fixing portion 16 is detached from the fixable portion 50 in this way.

As described above, according to this embodiment, in order to disengage the lock projection 52 and the lock piece 17, the lock piece 17 preferably can be resiliently deformed in the unlocking direction by at least partly inserting the unlocking jig D through the first opening 23 to engage the leading end thereof with the unlocking portion 20 and utilizing the lever action with the intermediate part of the unlocking jig D placed on the first fulcrum portion 22. The lock piece 17 can be similarly resiliently deformed in the unlocking direction by inserting the unlocking jig D through the second opening 27 to engage the leading end thereof with the unlocking portion 20 and utilizing the lever action with the intermediate part of the unlocking jig D placed on the second fulcrum portion 27 provided at a position different from the first fulcrum portion 22. The insertion area for the unlocking jig D differs depending on whether unlocking is effected using the first fulcrum portion 22 as a fulcrum or using the second fulcrum portion 27 as a fulcrum. Thus, unlocking can be effected by at least partly inserting the unlocking jig D into the selected one of the different insertion areas, wherefore restriction on the insertion area for the unlocking jig D can be more alleviated as compared to the case where the insertion area is limited to one spot.

Since it is sufficient to ensure either one of the two different insertion areas, a degree of freedom in designing for the arrangement of parts and the like can be improved and restriction in terms of the arrangement of parts can be alleviated.

Therefore, restriction on the insertion areas for the unlocking jig D necessary for the unlocking operation can be alleviated, which consequently leads to the alleviation of restriction in the arrangement of parts.

Accordingly, to provide a locking construction including a resiliently deformable lock piece and capable of alleviating restriction on a jig insertion area necessary for an unlocking operation and, consequently, alleviating restriction in terms of the arrangement of parts, an insertion area for an unlocking jig D differs depending on whether unlocking is effected using a first fulcrum portion 22 as a fulcrum or using a second fulcrum portion 27 as a fulcrum. Since this enables an unlocking operation to be carried out by at least partly inserting the unlocking jig D into the selected one of the different insertion areas, restriction on the insertion area for the unlocking jig D can be alleviated and consequently restriction in terms of the arrangement of parts can be alleviated as compared to the case where the insertion area is limited to one spot.

### <Other Embodiments>

The present invention is not limited to the above described and illustrated embodiment. For example, the following embodiments are also embraced by the technical scope of the present invention as defined by the claims.
(1) Although each lock piece 17 includes the pair of standing portions 17A standing up from the projecting ends of the corresponding one of the pair of connecting portions 19 in the foregoing embodiment, the present invention is not limited thereto. For example, the lock piece may include one cantilever-shaped standing portion.
(2) Although the vertically open passages 21 are defined between the corresponding unlocking portions 20 and engaging portions 17B so that the unlocking jig D can be inserted from both above and below to push the unlocking portion in the foregoing embodiment, the present invention is not limited thereto. For example, even if the upper ends of the unlocking portions are connected with the upper ends of the corresponding engaging portions and the unlocking jig is at least partly insertable only from below, restriction on the insertion area for the unlocking jig can be more alleviated than before.
(3) Although the bottom ends of the auxiliary walls 18 serve as the second fulcrum portions 27 in the foregoing embodiment, the present invention is not limited thereto. For example, the second fulcrum portions may be provided separately from the auxiliary walls.
(4) Although the present invention is applied in the case where the pair of left and right lock pieces 17 are provided in the foregoing embodiment, the present invention is not limited thereto and is also applicable in the case where only one lock piece is provided for each fixing portion.
(5) Although the auxiliary walls 18 are provided integral or unitary to the respective lock pieces 17 in the foregoing embodiment, such auxiliary walls 18 may not be necessarily provided if it is not necessary to give a large lock holding force or other means is provided to increase the lock holding force.

### LIST OF REFERENCE NUMERALS

- D: unlocking jig
- 15: guiding portion (one member)
- 17: lock piece
- 18: auxiliary wall
- 20: unlocking portion
- 22: first fulcrum portion
- 27: second fulcrum portion
- 50: fixable portion (other member)
- 51: lock wall portion
- 52: lock projection (lock portion)

## Claims

1. A locking construction for locking one member (15) and another member (50) in an attached state, comprising:
at least one lock piece (17) provided on the one member (15), having a cantilever shape whose front end in an attaching direction to the other member (50) is a free end, resiliently deformable upon attaching the one member (15) and the other member (50) to each other and resiliently at least partly restorable to be engaged with at least one lock portion (52) provided on the other member (50) when the two members (15, 50) reach a properly attached state,
at least one unlocking portion (20) which is provided at the lock piece (17) and with which the leading end of an unlocking jig (D) is engageable,
a first fulcrum portion (22) provided at a side of the lock piece (17) closer to the base end than the unlocking portion (20) in the one member (15) and adapted to support a part of the unlocking jig (D), which part is located closer to the base end of the unlocking jig (D) than the leading end thereof, when the leading end of the unlocking jig (D) is engaged with the unlocking portion (20), thereby supporting a lever action for resiliently deforming the lock piece (17) in an unlocking direction with the leading end of the unlocking jig (D), **characterized by**
a second fulcrum portion (27) provided at a position different from the first fulcrum portion (22) and adapted to support a part of the unlocking jig (D), which part is located closer to the base end of the unlocking jig (D) than the leading end thereof, when the leading end of the unlocking jig (D) is engaged with the unlocking portion (20), thereby supporting a lever action for resiliently deforming the lock piece (17) in the unlocking direction with the leading end of the unlocking jig (D), such that an insertion area for the unlocking jig (D) is different depending on whether unlocking is effected by using the first fulcrum portion (22) or the second fulcrum portion (27) as a fulcrum.

2. A locking construction according to claim 1, wherein the other member (50) includes a pair of lock wall portions (51) each having the lock portion (52) and substantially facing each other.

3. A locking construction according to claim 2, wherein a pair of lock pieces (17) are so provided as to be engageable with the pair of lock wall portions (51) from the corresponding outer sides.

4. A locking construction according to claim 2 or 3, wherein the respective lock pieces (17) are integrally or unitarily provided with auxiliary walls (18) at least partly insertable at the inner sides of the pair of lock wall portions (51) and capable of at least partly sandwiching the lock wall portions (51) in cooperation with the lock pieces (17).

5. A locking construction according to one or more of the preceding claims, wherein the unlocking portion (20) is exposed at the free end side of the lock piece (17).

6. A locking construction according to one or more of the preceding claims, wherein the lock piece (17) is comprised of a pair of standing portions (17A) standing up from the projecting end(s) of at least one connecting portion (19) and an engaging portion (17B) connecting the upper ends of the standing portions (17A).

7. A locking construction according to one or more of the preceding claims, wherein a first guiding surface (24) inclined or bent substantially along an inserting direction of the unlocking jig (D) is formed at the inner side of one portion of the unlocking portion (20).

8. A locking construction according to one or more of the preceding claims, wherein a second guiding surface (29) inclined or bent substantially along an inserting direction of the unlocking jig (D) is formed at the outer side of one portion of each auxiliary wall (18) and/or at the second fulcrum portion (27).

9. A connector having a wire holder (10) mounted thereto by means of a locking construction according to one or more of the preceding claims, wherein a guiding portion (15) of the wire holder (10) for holding the one or more bent wires (W) to extend in a specified direction is the one member (15) and a fixable portion (50) of a connector housing (10) of the connector is the other member (50).

10. A method for unlocking a locking construction locking one member (15) and another member (50) in an attached state, comprising the following steps:
providing at least one lock piece (17) on the one member (15), the lock piece (17) having a cantilever shape whose front end in an attaching direction to the other member (50) is a free end, resiliently deformable upon attaching the one member (15) and the other member (50) to each other and resiliently at least partly restorable to be engaged with at least one lock portion (52) provided on the other member (50) when the two members (15, 50) reach a properly attached state,
providing at least one unlocking portion (20) at the lock piece (17) and with which the leading end of an unlocking jig (D) is engageable,
**characterized by**
selectively engaging the unlocking jig (D) with
a first fulcrum portion (22) provided at a side of the lock piece (17) closer to the base end than the unlocking portion (20) in the one member (15) or a second fulcrum portion (27) provided at a position different from the first fulcrum portion (22), so as to select an insertion area for the unlocking jig (D),
said first fulcrum portion (22) and said second fulcrum portion (27) being adapted to support a part of the unlocking jig (D), which part is located closer to the base end of the unlocking jig (D) than the leading end thereof, when the leading end of the unlocking jig (D) is engaged with the unlocking portion (20), so as to generate a lever action for resiliently deforming the lock piece (17) in an unlocking direction with the leading end of the unlocking jig (D).

## Patentansprüche

1. Verriegelungskonstruktion zum Verriegeln eines Glieds (15) und eines anderen Glieds (50) in einem angebrachten Zustand, umfassend:
zumindest ein Verriegelungsstück (17), das an dem einen Glied (15) bereitgestellt ist, aufweisend die Form eines Auslegerarms, dessen vorderes Ende in einer Anbringungsrichtung an das bzw. zu dem anderen Glied (50) ein freies Ende ist, und zwar rückstellfähig verformbar beim Aneinanderanbringen des einen Glieds (15) an dem anderen Glied (50) und rückstellfähig zumindest teilweise rückstellbar, um mit zumindest einem Verriegelungsabschnitt (52) in Eingriff gebracht zu werden, der an dem anderen Glied (50) bereitgestellt ist, wenn die beiden Glieder (15; 50) einen ordnungsgemäß angebrachten Zustand erreichen,
zumindest einen Entriegelungsabschnitt (20), der an dem Verriegelungsstück (17) bereitgestellt ist und mit dem das Führungsende einer Entriegelungseinrichtung bzw. eines Entriegelungswerkzeugs (D) in Eingriff bringbar ist,
einen ersten Drehpunktabschnitt (22), der an einer Seite des Verriegelungsstücks (17) näher an dem Basisende als der bzw. dem Entriegelungsabschnitt (20) in dem einen Glied (15) bereitgestellt ist und angepasst ist, einen Teil der Entriegelungseinrichtung bzw. des Entriegelungswerkzeugs (D) zu stützen bzw. zu tragen bzw. zu lagern, der sich näher an dem Basisende der Entriegelungseinrichtung bzw. des Entriegelungswerkzeugs (D) als das bzw. dem Führungsende davon befindet, wenn das Führungsende der Entriegelungseinrichtung bzw. des Entriegelungswerkzeugs (D) mit dem Entriegelungsabschnitt (20) in Eingriff gebracht wird, wodurch eine Hebelaktion zum rückstellfähigen Verformen des Verriegelungsstücks (17) in einer Entriegelungsrichtung mit dem Führungsende der Entriegelungseinrichtung bzw. des Entriegelungswerkzeugs (D) unterstützt bzw. getragen wird, **gekennzeichnet durch**
einen zweiten Drehpunktabschnitt (27), der an einer Position unterschiedlich von dem ersten Drehpunktabschnitt (22) bereitgestellt ist und angepasst ist, einen Teil der Entriegelungseinrichtung bzw. des Entriegelungswerkzeugs (D) zu stützen bzw. zu tragen bzw. zu lagern, der sich näher an dem Basisende der Entriegelungseinrichtung bzw. des Entriegelungswerkzeugs (D) als das bzw. dem Führungsende davon befindet, wenn das Führungsende der Entriegelungseinrichtung bzw. des Entriegelungswerkzeugs (D) mit dem Entriegelungsabschnitt (20) in Eingriff gebracht wird, wodurch eine Hebelaktion zum rückstellfähigen Verformen des Verriegelungsstücks (17) in der Entriegelungsrichtung mit dem Führungsende der Entriegelungseinrichtung bzw. des Entriegelungswerkzeugs (D) unterstützt bzw. getragen wird, so dass ein Einsetzbereich für die Entriegelungseinrichtung bzw. das Entriegelungswerkzeug (D) abhängig davon unterschiedlich ist, ob eine Entriegelung unter Verwendung des ersten Drehpunktabschnitts (22) oder des zweiten Drehpunktabschnitts (27) als ein Drehpunkt bewirkt wird.

2. Verriegelungskonstruktion nach Anspruch 1, wobei das andere Glied (50) ein Paar Verriegelungswandabschnitte (51) enthält, die jeweils den Verriegelungsabschnitt (52) aufweisen und im Wesentlichen einander zugewandt sind.

3. Verriegelungskonstruktion nach Anspruch 2, wobei ein Paar Verriegelungsstücke (17) so bereitgestellt sind, dass sie mit dem Paar Verriegelungswandabschnitte (51) von den entsprechenden äußeren Seiten in Eingriff bringbar sind.

4. Verriegelungskonstruktion nach Anspruch 2 oder 3, wobei die jeweiligen Verriegelungsstücke (17) integral oder einstückig mit Hilfswänden (18) bereitgestellt bzw. versehen sind, die zumindest teilweise an den inneren Seiten des Paars Verriegelungswandabschnitte (51) einsetzbar sind und in der Lage sind, die Verriegelungswandabschnitte (51) in Kooperation mit den Verriegelungsstücken (17) sandwichartig zu umgeben.

5. Verriegelungskonstruktion nach einem oder mehreren der vorhergehenden Ansprüche, wobei der Entriegelungsabschnitt (20) an der freien Endseite des Verriegelungsstücks (17) freigelegt ist.

6. Verriegelungskonstruktion nach einem oder mehreren der vorhergehenden Ansprüche, wobei das Verriegelungsstück (17) aus einem Paar stehender Abschnitte (17A), die von dem/den vorspringenden Ende(n) zumindest eines Verbindungsabschnitts (19) nach oben stehen, und einem Eingriffsabschnitt (17B) besteht, der die oberen Enden der stehenden Abschnitte (17A) verbindet.

7. Verriegelungskonstruktion nach einem oder mehreren der vorhergehenden Ansprüche, wobei eine erste Führungsfläche bzw. -oberfläche (24), die im Wesentlichen entlang einer Einsetzrichtung der Entriegelungseinrichtung (D) geneigt oder gebogen ist, an der inneren Seite eines Abschnitts des Entriegelungsabschnitts (20) gebildet ist.

8. Verriegelungskonstruktion nach einem oder mehreren der vorhergehenden Ansprüche, wobei eine zweite Führungsfläche bzw. -oberfläche (29), die im Wesentlichen entlang einer Einsetzrichtung der Entriegelungseinrichtung (D) geneigt oder gebogen ist, an der äußeren Seite eines Abschnitts jeder Hilfswand (18) und/oder an dem zweiten Drehpunktabschnitt (27) gebildet ist.

9. Verbinder, der einen Drahthalter (10) aufweist, der an diesem mittels einer Verriegelungskonstruktion nach einem oder mehreren der vorhergehenden Ansprüche montiert ist, wobei ein Führungsabschnitt (15) des Drahthalters (10) zum Halten des einen oder der mehreren gebogenen Drähte (W), die sich in einer spezifizierten Richtung erstrecken, das eine Glied (15) ist und ein fixierbarer bzw. befestigbarer Abschnitt (50) eines Verbindergehäuses (10) des Verbinders das andere Glied (50) ist.

10. Verfahren zum Entriegeln einer Verriegelungskonstruktion, die ein Glied (15) und ein anderes Glied (50) in einem angebrachten Zustand verriegelt, umfassend die folgenden Schritte:
Bereitstellen zumindest eines Verriegelungsstücks (17) an dem einen Glied (15), wobei das Verriegelungsstück (17) die Form eines Auslegerarms aufweist, dessen vorderes Ende in einer Anbringungsrichtung an das bzw. zu dem anderen Glied (50) ein freies Ende ist, und zwar rückstellfähig verformbar beim Aneinanderanbringen des einen Glieds (15) an dem anderen Glied (50) und rückstellfähig zumindest teilweise rückstellbar, um mit zumindest einem Verriegelungsabschnitt (52) in Eingriff gebracht zu werden, der an dem anderen Glied (50) bereitgestellt ist, wenn die beiden Glieder (15; 50) einen ordnungsgemäß angebrachten Zustand erreichen,
Bereitstellen zumindest eines Entriegelungsabschnitts (20) an dem Verriegelungsstück (17) und mit dem das Führungsende einer Entriegelungseinrichtung bzw. eines Entriegelungswerkzeugs (D) in Eingriff bringbar ist,
**gekennzeichnet durch**
selektives Ineingriffbringen der Entriegelungseinrichtung bzw. des Entriegelungswerkzeugs (D) mit
einem ersten Drehpunktabschnitt (22), der an einer Seite des Verriegelungsstücks (17) näher an dem Basisende als der bzw. dem Entriegelungsabschnitt (20) in dem einen Glied (15) bereitgestellt ist, und einem zweiten Drehpunktabschnitt (27), der an einer Position unterschiedlich von dem ersten Drehpunktabschnitt (22) bereitgestellt ist, um einen Einsetzbereich für die Entriegelungseinrichtung bzw. das Entriegelungswerkzeug (D) zu wählen,
wobei der erste Drehpunktabschnitt (22) und der zweite Drehpunktabschnitt (27) angepasst sind, einen Teil der Entriegelungseinrichtung bzw. des Entriegelungswerkzeugs (D) zu stützen bzw. zu tragen bzw. zu lagern, der sich näher an dem Basisende der Entriegelungseinrichtung bzw. des Entriegelungswerkzeugs (D) als das bzw. dem Führungsende davon befindet, wenn das Führungsende der Entriegelungseinrichtung bzw. des Entriegelungswerkzeugs (D) mit dem Entriegelungsabschnitt (20) in Eingriff gebracht wird, um eine Hebelaktion zum rückstellfähigen Verformen des Verriegelungsstücks (17) in einer Entriegelungsrichtung mit dem Führungsende der Entriegelungseinrichtung bzw. des Entriegelungswerkzeugs (D) zu erzeugen.

## Revendications

1. Construction de verrouillage pour verrouiller un élément (15) et un autre élément (50) dans un état connecté, comprenant :
au moins une partie de verrou (17) prévue sur le premier élément (15) ayant une forme de porte-à-faux dont l'extrémité avant dans une direction de connexion à l'autre élément (50) est une extrémité libre, déformable de manière élastique suite à la connexion du premier élément (15) et de l'autre élément (50) l'un à l'autre et pouvant être restaurée au moins partiellement de manière élastique pour être engagée avec au moins une portion de verrou (52) prévue sur l'autre élément (50) lorsque les deux éléments (15, 50) atteignent un état correctement connecté,
au moins une portion de déverrouillage (20) qui est prévue sur la partie de verrou (17) et avec laquelle l'extrémité de tête d'un gabarit de déverrouillage (D) peut s'engager,
une première portion de point d'appui (22) prévue sur un côté de la partie de verrou (17) plus près de l'extrémité de base que la portion de déverrouillage (20) dans le premier élément (15) et adaptée à supporter une partie du gabarit de déverrouillage (D), laquelle partie est située plus près de l'extrémité de base du gabarit de déverrouillage (D) que l'extrémité de tête de celui-ci lorsque l'extrémité de tête du gabarit de déverrouillage (D) est engagée avec la portion de déverrouillage (20), supportant de ce fait une action de levier pour déformer de manière élastique la partie de verrou (17) dans une direction de déverrouillage avec l'extrémité de tête du gabarit de déverrouillage (D),
**caractérisée par**
une seconde portion de point d'appui (27) prévue en une position différente de la première portion de point d'appui (22) et adaptée à supporter une partie du gabarit de déverrouillage (D), laquelle partie est située plus près de l'extrémité de base du gabarit de déverrouillage (D) que l'extrémité de tête de celui-ci lorsque l'extrémité de tête du gabarit de déverrouillage (D) est engagée avec la portion de déverrouillage (20), supportant de ce fait une action de levier pour déformer de manière élastique la partie de verrou (17) dans la direction de déverrouillage avec l'extrémité de tête du gabarit de déverrouillage (D) de sorte qu'une zone d'insertion pour le gabarit de déverrouillage (D) est différente en fonction du fait que le déverrouillage est effectué en utilisant la première portion de point d'appui (22) ou la seconde portion de point d'appui (27) en tant que point d'appui.

2. Construction de verrouillage selon la revendication 1, dans laquelle l'autre élément (50) inclut une paire de portions de paroi de verrou (51) ayant chacune la portion de verrou (52) et se faisant essentiellement face l'une l'autre.

3. Construction de verrouillage selon la revendication 2, dans laquelle une paire de parties de verrou (17) est prévue de manière à pouvoir s'engager avec la paire de portions de paroi de verrou (51) depuis les côtés externes correspondants.

4. Construction de verrouillage selon la revendication 2 ou 3, dans laquelle les parties de verrou respectives (17) sont pourvues de manière intégrale ou unitaire de parois auxiliaires (18) pouvant au moins partiellement s'insérer sur les côtés internes de la paire de portions de paroi de verrou (51) et capables de mettre au moins partiellement en sandwich les portions de paroi de verrou (51) en coopération avec les parties de verrou (17).

5. Construction de verrouillage selon une ou plusieurs des revendications précédentes, dans laquelle la portion de déverrouillage (20) est exposée sur le côté d'extrémité libre de la partie de verrou (17).

6. Construction de verrouillage selon une ou plusieurs des revendications précédentes, dans laquelle la partie de verrou (17) est constituée d'une paire de portions verticales (17A) s'érigeant depuis la/les extrémité(s) saillante(s) d'au moins une portion de connexion (19) et d'une portion d'engagement (17B) connectant les extrémités supérieures des portions verticales (17A).

7. Construction de verrouillage selon une ou plusieurs des revendications précédentes, dans laquelle une première surface de guidage (24) inclinée ou courbée essentiellement le long d'une direction d'insertion du gabarit de déverrouillage (D) est formée sur le côté interne d'une portion de la portion de déverrouillage (20).

8. Construction de verrouillage selon une ou plusieurs des revendications précédentes, dans laquelle une seconde surface de guidage (29) inclinée ou courbée essentiellement le long d'une direction d'insertion du gabarit de déverrouillage (D) est formée sur le côté externe d'une portion de chaque paroi auxiliaire (18) et/ou au niveau de la seconde portion de point d'appui (27).

9. Connecteur ayant un porte-conducteur (10) monté sur lui au moyen d'une construction de verrouillage selon une ou plusieurs des revendications précédentes, dans lequel une portion de guidage (15) du porte-conducteur (10) pour maintenir le ou les fils électriques courbés (W) pour s'étendre dans une direction spécifiée est le premier élément (15) et une portion pouvant être fixée (50) d'un logement de connecteur (10) du connecteur est l'autre élément (50).

10. Procédé de déverrouillage d'une construction de verrouillage verrouillant un élément (15) et un autre élément (50) dans un état connecté, comprenant les étapes suivantes :
prévoir au moins une partie de verrou (17) sur le premier élément (15), la partie de verrou (17) ayant une forme de porte-à-faux dont l'extrémité avant dans une direction de connexion à l'autre élément (50) est une extrémité libre, déformable de manière élastique suite à la connexion du premier élément (15) et de l'autre élément (50) l'un à l'autre et pouvant être restaurée au moins partiellement de manière élastique pour être engagée avec au moins une portion de verrou (52) prévue sur l'autre élément (50) lorsque les deux éléments (15, 50) atteignent un état correctement connecté,
prévoir au moins une portion de déverrouillage (20) sur la partie de verrou (17) et avec laquelle l'extrémité de tête d'un gabarit de déverrouillage (D) peut s'engager,
**caractérisé par**
l'engagement sélectif du gabarit de déverrouillage (D) avec une première portion de point d'appui (22) prévue sur un côté de la partie de verrou (17) plus près de l'extrémité de base que la portion de déverrouillage (20) dans le premier élément (15) ou une seconde portion de point d'appui (27) prévue en une position différente de la première portion de point d'appui (22) de manière à sélectionner une zone d'insertion pour le gabarit de déverrouillage (D),
ladite première portion de point d'appui (22) et ladite seconde portion de point d'appui (27) étant adaptées à supporter une partie du gabarit de déverrouillage (D), laquelle partie est située plus près de l'extrémité de base du gabarit de déverrouillage (D) que l'extrémité de tête de celui-ci lorsque l'extrémité de tête du gabarit de déverrouillage (D) est engagée avec la portion de déverrouillage (20) de manière à générer une action de levier pour déformer de manière élastique la partie de verrou (17) dans une direction de déverrouillage avec l'extrémité de tête du gabarit de déverrouillage (D).
